Europäisches Patentamt

European Patent Office

Office européen des brevets

(19)

(11) Veröffentlichungsnummer: **0 090 355**
**A1**

(12) **EUROPÄISCHE PATENTANMELDUNG**

(21) Anmeldenummer: **83102937.6**

(22) Anmeldetag: **24.03.83**

(51) Int. Cl.³: **C 09 D 5/10, C 23 F 11/18**

(30) Priorität: **30.03.82 GB 8209284**

(43) Veröffentlichungstag der Anmeldung: **05.10.83**
**Patentblatt 83/40**

(84) Benannte Vertragsstaaten: **DE FR IT**

(71) Anmelder: **ITT INDUSTRIES INC., 320 Park Avenue, New York, NY 10022 (US)**
(84) Benannte Vertragsstaaten: **FR IT**

(71) Anmelder: **Deutsche ITT Industries GmbH, Hans-Bunte-Strasse 19 Postfach 840, D-7800 Freiburg (DE)**
(84) Benannte Vertragsstaaten: **DE**

(72) Erfinder: **Drake, Cyril Francis, 1 Church Cottages Peldon Road, Harlow, Essex (GB)**
Erfinder: **Jones, Ronald, 14 Leat Close, Sawbridgeworth, Hertfordshire (GB)**
Erfinder: **Jones, Gladys Mary, 15 Stewards Green Road, Epping, Essex (GB)**

(74) Vertreter: **Gähr, Hans-Dieter et al, c./o. Standard Elektrik Lorenz AG Patent- und Lizenzwesen Postfach 300 929 Kurze Strasse 8, D-7000 Stuttgart 30 (DE)**

(54) **Farbzusammensetzung zur Verhinderung von Korrosion einer Metalloberfläche.**

(57) Eine Farbzusammensetzung zur Verhinderung von Korrosion auf einer Metalloberfläche enthält ein pulverförmiges Opfermetall für diese Oberfläche und ein pulverförmiges, wasserlösliches Glas mit korrosionsverhindernden Eigenschaften. Typischerweise ist die Farb- oder Anstrichzusammensetzung mit pulverförmigem Zink angereichert und mit pulverförmigem, wasserlöslichem Glas, das ein Kalzium/Zink-Phosphatglas ist.

EP 0 090 355 A1

ACTORUM AG

C.F.Drake 86-6-3


Farbzusammensetzung zur Verhinderung
von Korrosion einer Metalloberfläche.


Die Erfindung betrifft Zusammensetzungen zur Verhinderung von Korrosion einer Metalloberfläche und Farb- oder Anstrichverbindungen, die solche Zusammensetzungen enthalten. Die Erfindung betrifft auch aus Metall hergestellte Artikel oder Körper, die mit solch einem Korrosionsschutz versehen sind.

Eines der Hauptprobleme bei der Verwendung von Metallen, wie baulichen Materialien und hergestellten Artikeln, liegt in der Korrosion des Metalls. Eisenhaltige Metalle sind besonders anfällig gegenüber Korrosion. Als Alternative zu Stahl können auch andere Metalle verwendet werden, wie z.B. Aluminium oder geschützter Stahl, der mit einer aufgebrachten Schutzschicht versehen ist. Beispielsweise können so Materialien verwendet werden, die Zink, Aluminium oder Cadmium enthalten.

Zinküberzüge können beispielsweise dazu verwendet werden, um Stahl vor dem Rosten zu schützen. Zinküberzüge

C.F.Drake 86-6-3

haben einen guten Widerstand gegen Korrosion; da Zink anodisch gegenüber Stahl ist, kann damit ein kathodischer Schutz erreicht werden. Diese Überzüge können auch dazu verwendet werden, eine Korrosion zu verhindern, wenn zwei unähnliche Metalle, z.B. Kupfer und Stahl, aneinanderliegen.

Insbesondere können Farben oder Anstriche, die pulverisiertes Opfermetall (sacrificial metal) enthalten, als Überzüge auf Oberflächen von Stahl verwendet werden. Zink wird oftmals in Form von Staub in Farben oder Anstrichen verwendet. Diese Farben oder Anstriche wiederum sind dazu geeignet beispielsweise Stahl, galvanisch behandelten Stahl oder mit einen Überzug versehenen Stahl, wie er in der GB-PS 14 24 465 (Diamond-Shamrock) beschrieben ist, zu schützen. Einige Arten von Farben oder Anstrichen, die allgemein verwendet werden, enthalten Zinkstaub/Zinkoxid pigmentierte und mit Zink angereicherte Farbstoffe. Mit Zink angereicherte Farben oder Anstriche können organische oder anorganische Bindemittel enthalten, wie beispielsweise Epoxidharze/Polyamide, Äthylen-Silikate usw., und sind mit hohen Anteilen von Zinkstaub pigmentiert.

Es ist eine Überlegung, daß mit Zink angereicherte Farben oder Anstriche Stahl in derselben Weise schützen können, wie eine ununterbrochene Schicht aus metallischem Zink, die für einen galvanischen Schutz sorgt als auch für das Vorsehen eines Hemmschutzes für das Grundmaterial, aber sie haben auch den Vorteil, daß sie mit einer Vielzahl von Techniken angewendet werden können, die auch solche konventionelle Verfahren mit einschließt wie beispielsweise Besprühen, Tauchen oder Anstreichen, deren Anwendung nicht nur auf den Herstellerbetrieb beschränkt ist,

C.F.Drake 86-6-3

sondern an jedem Ort, an dem eine Verwendung erwünscht ist, erfolgen kann. Wie auch immer, wenn das Grundmaterial der Umgebung gegenüber ungeschützt gelassen wird, wird dies sehr schnell korrodieren und dabei eine Schicht von Korrosionsprodukten auf der Oberfläche bilden, die unansehnlich ist und für einen weiteren Überzug Schwierigkeiten bereitet.

Es kommt sehr häufig vor, gerade, wenn das Grundmaterial der Umgebung gegenüber vorher ungeschützt und mit einem Überzug versehen worden ist, daß als Folge des Ungeschütztseins und der Zinkkorrosion es dazu führt, daß ein Verlust der Haftung der Zwischenschicht und das Entstehen einer Schicht von unansehnlichen Korrosionsprodukten an der äußersten Oberfläche eintritt. Diese Effekte haben insbesondere deren Verwendung in Anordnungen begrenzt, die wünschenswerte Oberflächenabschlüsse erfordern, die eine hohe Anforderung an das Aussehen stellen.

Der Zweck der vorliegenden Erfindung ist, diese Nachteile zu verringern oder zu beseitigen.

Es ist deshalb die Aufgabe der vorliegenden Erfindung eine Farbzusammensetzung zu schaffen, die sich leicht und problemlos verarbeiten lässt und die die Oberfläche von gegen Korrosion zu schützenden Metallen dauerhaft schützt und der Oberfläche ein gutes Aussehen verleiht.

Die Lösung dieser Aufgabe ist in den im Kennzeichen des Anspruchs 1 aufgeführten Maßnahmen enthalten.

0090355

C.F.Drake 86-6-3


Vorteilhafte Weiterbildungen nach der Erfindung sind in den Unteransprüchen enthalten.

Unsere schwebende deutsche Anmeldung P 33 04 866 (GB-Anmeldung Nr. 82 04 553 - C.F.Drake 85-5-2) beschreibt und stellt ein Verfahren zur Verhinderung von Korrosion eines nichteisenhaltigen Metalls oder einer Legierung davon unter Schutz, wobei das Verfahren eine Behandlung der Oberfläche mit einer korrosionsverhindernden Zusammensetzung einschließt, die aus einem säurehaltigen, wasserlöslichen Glas besteht.

Die Technik, die hierin beschrieben wird, ist besonders bei mit Zink angereicherten Farben oder Anstrichen anwendbar, aber es ist selbstverständlich, daß die Erfindung nicht nur auf dieses (Metall) beschränkt ist und daß die Technik ebenso bei Farben oder Anstrichen angewendet werden kann, die andere Opfermetalle (sacrificial metals) enthalten.

Wir haben herausgefunden, daß die Einverleibung eines korrosionsverhindernden Glases in die Anstrich- bzw. Farbzusammensetzungen, wie sie in unseren GB-Anmeldungen Nr. 80 36 718 und 81 07 776 (C.F.Drake 73-2-1 und C.F.Drake 74-3-2) und den schwebenden GB-Anmeldungen Nr. 81 38 285 (C.F.Drake-84) und 82 04 553 (Deutsche Anmeldung P 33 04 866 - C.F.Drake 85-5-2) beschrieben sind, ein hohes Maß von Korrosionsschutz für Zinkstaub in dem Anstrich oder der Farbe vorsieht und die Bildung von Oberflächenablagerungen sowie den Verlust der Haftung der Zwischenschicht herabsetzt, ohne bereits einen Einfluß auf den Schutz durch den Überzug selbst zu nehmen. Anstrich- oder Farbzusammensetzungen dieser Art können so, sogar unter Ausnutzung in einer ungünstigen Umge-

C.F.Drake 86-6-3

bung, mit Farb- oder Anstrichsystemen verwendet werden, bei denen eine hohe Anforderung an das Aussehen gestellt wird. Insbesondere wird der Oberflächenabschluß in einer ausreichenden Qualität bei der Anwendung für Fahrzeugkarosserien erhalten. Charakteristischerweise können bis zu 50 Gewichtsprozent (von dem korrosionsverhindernden Metall) einer konventionellen metallischen, Zink enthaltenden Farbe durch eine korrosionsverhindernde, wasserlösliche Glaszusammensetzung ersetzt werden.

Das Glas kann zum Beispiel ein Kalzium-Zinkphosphat-Glas sein, aber es ist nicht darauf beschränkt. Das Glas ist in Pulverform und kann typischerweise eine Partikelgröße bis zu 100 μ (micron) aufweisen, obgleich die obere Grenze (Schichtdicke) bei Anwendungen niedriger sein wird, in denen die Farb- bzw. Anstrichfilmdicken kleiner sind als 100 μ (micron), beispielsweise bei Verwendung an Fahrzeugkarosserien.

Für viele Anwendungen geeignete Gläser enthalten 30 bis 60 mol % Zinkoxid, eine Spur bis 2 mol % Kalziumoxid und 35 bis 45 mol % Phosphorpentoxid, diese Glassorten sind aber nicht darauf beschränkt. In einigen Anwendungen können diese Glassorten auch Vanadiumpentoxid enthalten. Glassorten dieses Typs sind in unserer schwebenden GB-Anmeldung Nr. 81 38 285 (C.F.Drake 84) beschrieben. Es wird natürlich durch den Stand der Technik zu würdigen sein, daß die getrennten Oxide nicht notwendigerweise in dem Glas in ihrer freien Form vorhanden sind. Es ist, wie auch immer, beides üblich und zutreffend die Zusammensetzung eines Glases in den Grenzen der wesentlichsten Oxide zu beschreiben.

Das Glas ist in der Farbzusammensetzung vollkommen

C.F.Drake 86-6-3

verteilt, die dann durch irgendeine konventionelle Technik an einer Oberfläche eines Metalls, z.B. Stahl, anwendbar ist. Wir haben herausgefunden, daß solche Farben oder Anstriche, nicht vergleichbar mit den konventionellen mit Zink angereicherten Farben oder Anstrichen sind und eine ausgezeichnete Bindung unter aggressiven Bedingungen gegenüber einem nachfolgenden Abschlußanstrich oder -überzug aufweisen, der durch den Gebrauch von Materialien oder Verfahrenstechniken angewendet wird, die vom Stand der Technik her bekannt sind.

Um die Technik zu illustrieren, die hierin beschrieben ist, haben wir das Maß der Korrosion an Mustern von verschiedenen Nichteisenmetallen bestimmt und dabei die von M.Stern beschriebene Methode ("Corrosion", Vol.14 pp 440 - 444, 1958) verwendet.

Zylindrische Proben von Zink, Aluminium und Kupfer, mit einem Durchmesser von 0,8 mm, und von Kadmium, mit einem Durchmesser von 0,6 mm, wurden verwendet. Die Metalle waren von einer Reinheit von 99,999% oder größer. Zylindrische Abschnitte mit einer Länge von 1 cm wurden auf einer kreisförmigen Fläche angebohrt, mit Gewinde versehen und verdrahtet und zwar so, daß sie später eine elektrische Verbindung gestatteten. Die Proben wurden dann metallographisch durch Kaltvulkanisierung in einem Polyesterharz so befestigt, daß die gegenüberliegende Fläche der Probe hervorstand. Die hervorstehende Fläche der Probe wurde mit einem 220 körnigem Schleifpapier abgeschliffen, bevor sie 4 cm unterhalb der Oberfläche der Testlösungen angebracht wurden.

Den Testlösungen wurde ein wässriges 0,1 M Kalziumchlorid, wenn notwendig mit hinzugegebenen Pigmenten, zu einer Konzentration von 10g $L^{-1}$ hinzugefügt. Die Glas

C.F.Drake 86-6-3

pigmente hatten im Durchschnitt eine Partikelgröße von kleiner als 10 $\mu$ (micron). Die Testlösungen waren in einem Thermostatbad mit einer Temperatur von 25°C angeordnet.

Bei Verwendung eines "Ministat Potentiostat" der Firma H.B. Thompson und Partner wurden lineare Polarisationsdaten erhalten. Die Bezugs- und Hilfselektroden bestanden aus Quecksilberchlorid (calomel) bzw. aus Platin. Der "Polarisationswiderstand" Rp wurde 4 Stunden nach Einsetzen in die Testlösungen bestimmt. Dies wurde durch die Messung des Stromes durchgeführt, der sich aus der Anlegung eines Potentials von nicht mehr als $\pm$ 25 mV im Hinblick auf das Korrosionspotential Ecorr der Testelektrode ergibt. Das Potential wurde bei einer Größe von 5mV $min^{-1}$ von der Kathoden- zur Anodenregion geprüft.

Der Verhinderungseffekt eines Pigmentes ist annähernd umgekehrt proportional zu dem "Polarisationswiderstand" Rp und die Wirksamkeit der Verhinderung I, ausgedrückt in Prozent, wird so gegeben durch :

$$I(\%) = \frac{(1/Ro - 1/Ri) \times 100}{1/Ri}$$

$$= \frac{(Ri - Ro) \times 100}{Ri}$$

wobei Ro der Polarisationswiderstand bei Fehlen des Hemmstoffes und Ri der Polarisationswiderstand bei hinzugegebenem Hemmstoff ist.

C.F.Drake 86-6-3

Drei Glassorten wurden bei dieser Auswertung verwendet. Die Glassorten hatten die folgenden mol%-Zusammensetzungen :

| | $Zn\,O$ | $Al_2O_3$ | $CaO$ | $P_2O_5$ |
|---|---|---|---|---|
| Glas 1 | 56,2 | 1,3 | - | 42,5 |
| Glas 2 | 50,9 | - | 12,8 | 36,3 |
| Glas 3 | 31,6 | - | 30,6 | 37,8 |

Die Ergebnisse sind in der unteren Tafel 1 zusammengefaßt, mit Beispielen 1 und 5 repräsentieren sie den freien Korrosionsablauf bei beispielsweise nicht hinzugegebenen diesen verhindernden Pigmenten.

| Beispiel | Elektroden-metall | Korrosions-verhinderer | % Verhinderung |
|---|---|---|---|
| 1 | Zn | - | 0 |
| 2 | Zn | Glas 1 | 89 |
| 3 | Zn | Glas 2 | 99 |
| 4 | Zn | Glas 3 | 99 |
| 5 | Al | - | 0 |
| 6 | Al | Glas 1 | 67 |
| 7 | Al | Glas 3 | 100 |

Um die Technik weiterhin zu erläutern, wurden zwei Anstrich- oder Farbzusammenstellungen zubereitet. Diese wurden jede für sich auf eine Stahltafel aufgetragen und zwar in einer Filmdicke von 75 $\mu$ (micron), trocknen

C.F.Drake 86-6-3

lassen, dann bis auf das eiserne Metall (Grundmaterial) angeritzt und einer Salzbesprühung in Übereinstimmung mit ASTM B 117-73 ausgesetzt. Diese Stahltafeln wurden nach 24 Stunden geprüft. Die Zusammensetzung A, die aus einem unbehandelten mit Zink angereicherten Anstrich bestand und die zu Vergleichszwecken (in die Untersuchung) einbezogen worden ist, zeigte sehr schlimme Verschlechterungen mit Blasenbildung und Anhäufung von Ablagerungen an allen Stellen über den ganzen Film. Die Zusammensetzung B war im wesentlichen frei von Korrosionsprodukten, außer von leichten Weißfärbungen innerhalb der Anritzstelle selbst.

Die Ergebnisse sind in der unteren Tabelle zusammengestellt.

Zusammenstellung für mit Zink angereicherte Primer, auf Epoxidharz-Ester basierend.

| | Angaben in Gewichtsprozent | |
|---|---|---|
| Zusammensetzung | A | B |
| Zinkstaub (Durham Ultrafine) | 76,10 | 71,30 |
| Glas 3[+] | -- | 3,46 |
| Synolac 463 X | 11,00 | 11,45 |
| Kalziumoxid | 0,50 | 0,52 |
| Bentonit 38 (Bentone 38) | 0,70 | 0,73 |
| Nuodex Co 8% | 0,04 | 0,04 |
| Xylol (Xylene) | 11,66 | 12,56 |

0090355

C.F.Drake 86-6-3

---

$^+$ 31,6 mol % ZnO, 30,6 mol % CaO und
37,8 mol % $P_2O_5$.

---

Diese Beispiele illustrieren die Durchführbarkeit der
hierin beschriebenen Technik.

C.F.Drake 86-6-3

Patentansprüche

1. Farbzusammensetzung zur Verhinderung von Korrosion auf einer Metalloberfläche, dadurch gekennzeichnet, daß die Farbzusammensetzung ein aus Partikeln bestehendes Opfermetall für die zu schützende Metalloberfläche und ein aus Partikeln bestehendes wasserlösliches Glas mit korrosionsverhindernden Eigenschaften enthält.

2. Farbzusammensetzung, die mit Zink angereichert ist, für das Aufbringen eines galvanischen Schutzes auf einer Metalloberfläche, dadurch gekennzeichnet, daß die Farbzusammensetzung ein aus Partikeln bestehendes wasserlösliches Glas mit korrosionsverhindernden Eigenschaften enthält.

3. Farbzusammensetzung nach Anspruch 2, dadurch gekennzeichnet, daß der Gewichtsanteil des Glases in der Zusammensetzung kleiner als oder gleich 50% des Gewichtsanteils von Zink ist.

4. Farbzusammensetzung nach einem der Ansprüche 1 bis 3, dadurch gekennzeichnet, daß das Glas ein Kalziumphosphatglas ist.

ZT/P 1, Kre/-,22.03.1983

0090355

C.F. Drake 86-6-3

5. Farbzusammensetzung nach einem der Ansprüche 1 bis 4, dadurch gekennzeichnet, daß das Glas 30 bis 60 mol% Zinkoxid, 45 bis 35 mol% Phosphorpentoxid enthält und der Rest bis zu 35 mol% Kalziumoxid und bis zu 2 mol% Aluminium umfaßt.

6. Farbzusammensetzung nach einem der Ansprüche 1 bis 5, dadurch gekennzeichnet, daß das Glas eine Partikelgröße zwischen 10 $\mu$ (micron) und 100 $\mu$ (micron) aufweist.

| | EINSCHLÄGIGE DOKUMENTE | | EP 83102937.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US - A - 3 372 038 (H.H. WELDES et al.) <br> * Ansprüche * <br> -- | 1-3 | C 09 D 5/10 <br> C 23 F 11/18 |
| Y | US - A - 4 153 465 (F. HUND et al.) <br> * Ansprüche * <br> -- | 4 | |
| Y | US - A - 3 892 577 (Y. SUGAHARA et al.) <br> * Ansprüche * <br> -- | 4,5 | |
| Y | DE - B2 - 2 319 780 (HOOKER CHEMICALS & PLASTICS CORPORATION) <br> * Anspruch 1; Spalte 1, Zeile 40 - Spalte 2, Zeile 7 * <br> -- | 1 | |
| D,Y | GB - A - 2 067 179 (STANDARD TELEPHONES AND CABLES LIMITED) <br> * Ansprüche * <br> -- | 2,5 | RECHERCHIERTE SACHGEBIETE (Int. Cl. ³) <br> C 09 D <br> C 23 F |
| Y | GB - A - 2 062 612 (STANDARD TELEPHONES AND CABLES LIMITED) <br> * Ansprüche * <br> ---- | 2,5 | |

Der vorliegende Recherchenbericht wurde für alle Patentansprüche erstellt.

| Recherchenort | Abschlußdatum der Recherche | Prüfer |
|---|---|---|
| WIEN | 22-06-1983 | SLAMA |